# EUROPEAN PATENT SPECIFICATION

(11) **EP 2 439 912 B1**
(45) Date of publication and mention of the grant of the patent: **12.03.2014**
(21) Application number: 10783278.4
(22) Date of filing: 21.05.2010
(51) Int. Cl.: H04M 1/02

(54) **TILTING MECHANISM AND SLIDING DEVICE**
KIPPMECHANISMUS UND GLEITVORRICHTUNG
MÉCANISME D'INCLINAISON ET DISPOSITIF COULISSANT

(30) Priority: 04.06.2009 JP 2009134996
(43) Date of publication of application: 11.04.2012
(73) Proprietor: Mitsubishi Steel MFG. CO., LTD., Chuo-ku Tokyo 104-8550 (JP)
(72) Inventor: MITSUI, Yasuhiro, Ichikawa-shi Chiba 272-0127 (JP); KATSUTA, Tetsuya, Ichikawa-shi Chiba 272-0127 (JP)
(74) Representative: Regimbeau
(86) International application number: PCT/JP2010/058645
(87) International publication number: WO 2010/140494

(56) References cited:
- EP-A1- 1 722 538
- EP-A1- 1 916 826
- WO-A1-2010/071179
- JP-A- 2007 049 650
- JP-A- 2007 074 411
- JP-A- 2007 148 817
- JP-A- 2007 267 238
- JP-A- 2009 088 667

## Description

### Technical Field

The present invention relates to tilting mechanisms and sliding apparatuses, and specifically relates to a tilting mechanism suitable for use in a portable terminal apparatus, and a sliding apparatus provided with the tilting mechanism.

### Background Art

For example, as a type of portable terminal apparatuses, a mobile telephone is provided, wherein a second housing in which a liquid crystal display apparatus, etc., are arranged can be slid relative a first housing in which a ten-key unit, etc., are arranged. In this type of mobile telephone is installed a sliding mechanism which allows a sliding operation of a housing. As this type of sliding mechanism, a mechanism is known which is disclosed in Patent Document 1, for example.

On the other hand, in recent years, there has been an increase in the number of functions of the mobile telephone and the mobile telephone is being provided such that the liquid crystal display apparatus which the mobile telephone has is used to receive and display a television broadcast. In this way, when watching, for a relatively long time, images displayed on the liquid crystal display apparatus, viewability of the liquid crystal display apparatus is low with the sliding mechanism which merely slides, in a horizontal direction, the second housing relative to the first housing.

Therefore, as shown in Patent documents 2 and 3, for example, the mobile telephone is being provided, wherein a tilting mechanism is provided which tilts, relative to the first housing, the second housing in which the liquid crystal display apparatus is arranged.

### [Prior Art Documents]

### [Patent Document]

[Patent Document 1] JP2005-210649A
[Patent Document 2] JP2009-071511A
[Patent Document 3] JP2009-027520A

### Summary of the Invention

### Problem to be Solved by Invention

However, there is a problem of poor operability with a tilting mechanism according to the prior art as an operator tilts the second housing relative to the first housing, on a manual basis, rotationally moving the second housing relative to the first housing.

Moreover, a problem exists with the prior art tilting mechanism in that there is a need to separately provide the sliding mechanism which slides the second housing relative to the first housing and the tilting mechanism which tilts the second housing relative to the first housing, so that the number of parts increases and the mobile telephone which provides the respective mechanisms becomes large.

The present invention aims to provide a tilting mechanism and a sliding mechanism which may improve the operability and simplify the mechanism.

In view of the above-described problem, an object of the present invention is to provide a tilting mechanism and a sliding apparatus that can improve the operability and simplify the mechanism.

### Means to Solve the Problem

In order to solve the above-described problem, a tilting mechanism of the present invention includes a base platform, an oscillating frame which is oscillatably mounted on the base platform, an elevating/lowering member which is mounted on the oscillating frame and which performs elevating/lowering operations with respect to the oscillating frame by rotating, and a cam mechanism which energizes the elevating/lowering member such that the elevating/lowering member is tilted relative to the base platform in conjunction with the rotating of the elevating/lowering member, the cam mechanism including a cam section which is formed at an inner wall of an opening formed at the base platform and a projecting section which is formed such that the projecting section projects toward outside the elevating/lowering member and which engages the cam section.

In order to solve the above-described problem, a sliding apparatus according to the present invention includes a base plate, a sliding plate which slides relative to the base plate, a spring member which energizes the sliding plate relative to the base plate, and a tilting mechanism, wherein the tilting mechanism includes a base platform, an oscillating frame which is oscillatably mounted on the base platform, an elevating/lowering member which is mounted on the oscillating frame and which performs elevating/lowering operations with respect to the oscillating frame by rotating, and a cam mechanism which energizes the elevating/lowering member such that the elevating/lowering member is tilted relative to the base platform in conjunction with the rotating of the elevating/lowering member, the cam mechanism including a cam section which is formed at an inner wall of an opening formed at the base platform and a projecting section which is formed such that the projecting section projects toward outside the elevating/lowering member and which engages the cam section, wherein the base plate is mounted on the tilting mechanism, a connecting member is provided between the elevating/lowering member of the tilting mechanism and the sliding plate, and the sliding plate is slid relative to the base plate, so that the elevating/lowering member rotates via the connecting member and the base plate is tilted by the tilting mechanism.

### Effect of the invention

The tilting mechanism and the sliding apparatus of the present invention, in conjunction with rotating of the elevating/lowering member, makes it possible to conduct elevating/lowering operations and tilting operations at the same time.

### Brief Description of Drawings

FIG. 1A is a perspective diagram which shows a closed state of a sliding apparatus of an embodiment of the present invention;
FIG. 1B is a perspective diagram which shows an open state of the sliding apparatus of the embodiment of the present invention;
FIG. 2A is a perspective diagram which shows a closed state of a portable terminal apparatus to which is applied the sliding apparatus of the embodiment of the present invention;
FIG. 2B is a perspective diagram which shows an open state of the portable terminal apparatus to which is applied the sliding apparatus of the embodiment of the present invention;
FIG. 3A is a perspective diagram which shows an assembled state of a spring member of the sliding apparatus shown in FIG. 1A;
FIG. 3B is a perspective diagram which shows an exploded state of the spring member shown in FIG. 3A;
FIG. 4 is a perspective diagram of a tilting mechanism of an embodiment of the present invention;
FIG. 5A is a side view of the tilting mechanism shown in FIG. 4 before being tilted;
FIG. 5B is a side view of the tilting mechanism shown in FIG. 4 after being tilted;
FIG. 6 is a perspective diagram of the tilting mechanism shown in FIG. 4 with a base platform thereof removed;
FIG. 7 is an exploded perspective diagram of the tilting mechanism shown in FIG. 4 with the base platform being removed;
FIG. 8A is a plan view showing a closed state of the tilting mechanism shown in FIG. 4;
FIG. 8B is a cross-sectional view showing the closed state of the tilting mechanism shown in FIG, 4;
FIG. 9A is a plan view showing an intermediate state from the closed state to an open state of the tilting mechanism shown in FIG. 4;
FIG. 9B is a cross-sectional view showing the intermediate state of the tilting mechanism shown in FIG. 4;
FIG. 10A is a plan view showing a state of being further slid from the intermediate state of the tilting mechanism shown in FIG. 4;
FIG. 10B is a cross-sectional view showing the state of being further slid from the intermediate state of the tilting mechanism shown in FIG. 4;
FIG. 11A is a plan view showing the open state of the tilting mechanism shown in FIG. 4;
FIG. 11B is a cross-sectional view showing the open state of the tilting mechanism shown in FIG. 4;
FIG. 12A is a plan view showing the closed state of the sliding apparatus shown in FIG. 1A;
FIG. 12B is a front view showing the closed state of the sliding apparatus shown in FIG. 1A;
FIG. 12C is a side view showing the closed state of the sliding apparatus shown in FIG. 1A;
FIG. 13A is a plan view showing an intermediate state of the sliding apparatus shown in FIG. 1A;
FIG. 13B is a front view showing the intermediate state of the sliding apparatus shown in FIG. 1A;
FIG. 13C is a side view showing the intermediate state of the sliding apparatus shown in FIG. 1A;
FIG. 14A is a plan view showing the open state of the sliding apparatus shown in FIG. 1A;
FIG. 14B is a front view showing the open state of the sliding apparatus shown in FIG. 1A;
FIG. 14C is a side view showing the open state of the sliding apparatus shown in FIG. 1A;
FIG. 15A is a plan view showing a closed state of the sliding apparatus of other embodiments of the present invention;
FIG. 15B is a front view showing the closed state of the sliding apparatus shown in FIG. 15A;
FIG. 15C is a side view showing the closed state of the sliding apparatus shown in FIG. 15A;
FIG. 16A is a plan view showing an intermediate state of the sliding apparatus shown in FIG. 15A;
FIG. 16B is a front view showing the intermediate state of the sliding apparatus shown in FIG. 15A;
FIG. 16C is a side view showing the intermediate state of the sliding apparatus shown in FIG. 15A; and
FIG. 17A is a plan view showing an open state of the sliding apparatus shown in FIG. 15A;
FIG. 17B is a front view showing the open state of the sliding apparatus shown in FIG. 15A; and
FIG. 17C is a side view showing the open state of the sliding apparatus shown in FIG. 15A.

### Mode for Carrying Out the Invention

Next, modes for carrying out the present invention are described in conjunction with the drawings.

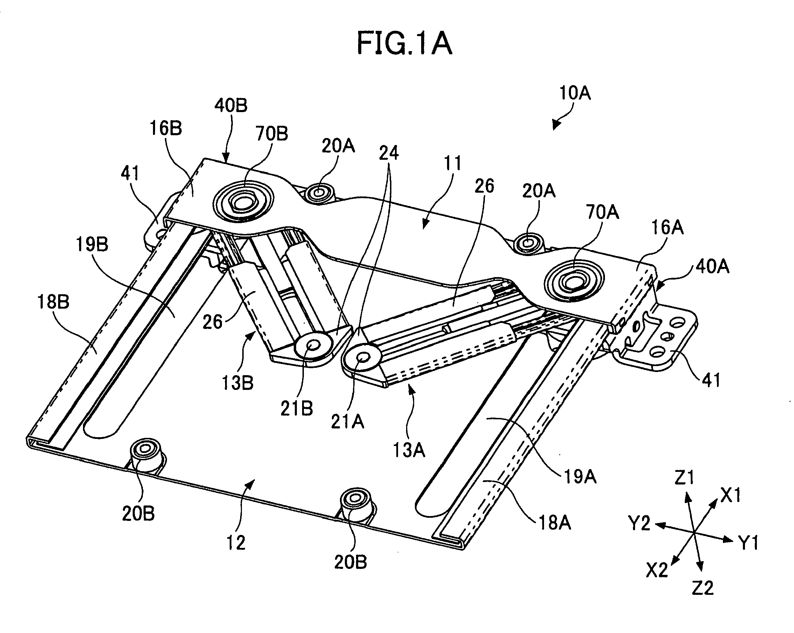

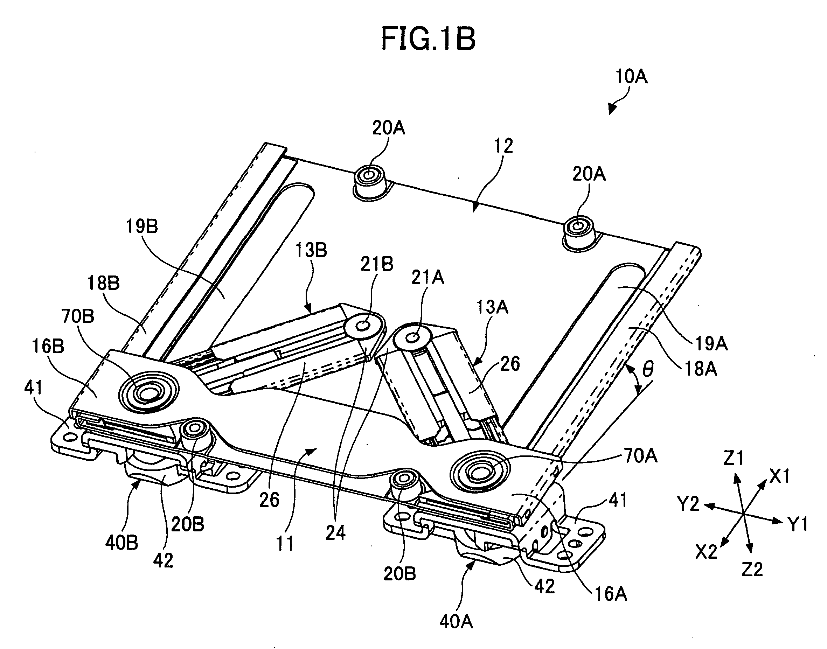

FIGS. 1A and 1B show a sliding apparatus 10A of one embodiment of the present invention.

The sliding apparatus 10A includes a base plate 11, a sliding plate 12, spring members 13A and 13B, tilting mechanisms 40A and 40B, etc. The sliding apparatus 10A provides a function of sliding the sliding plate 12 relative to the base plate 11 in arrow X1 and X2 directions shown in FIGS. 1A and 1B and a function of sliding the sliding plate 12 in the X1 direction to upwardly tilt by an angle θ relative to horizontal directions (the X1 and X2 directions).

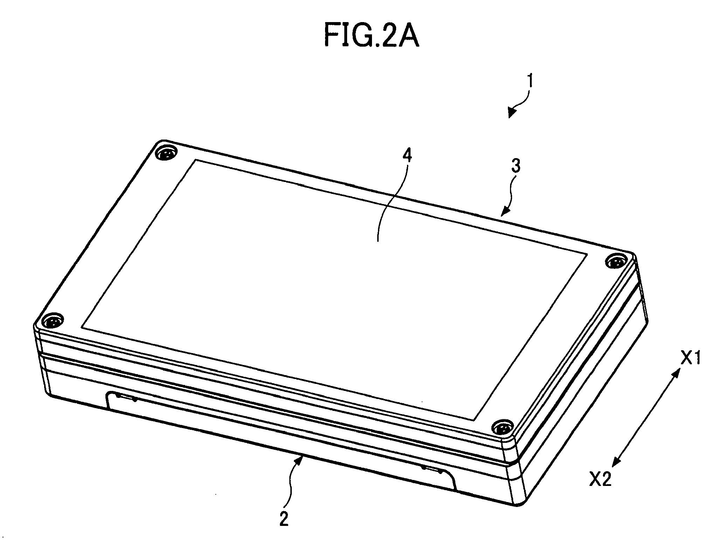

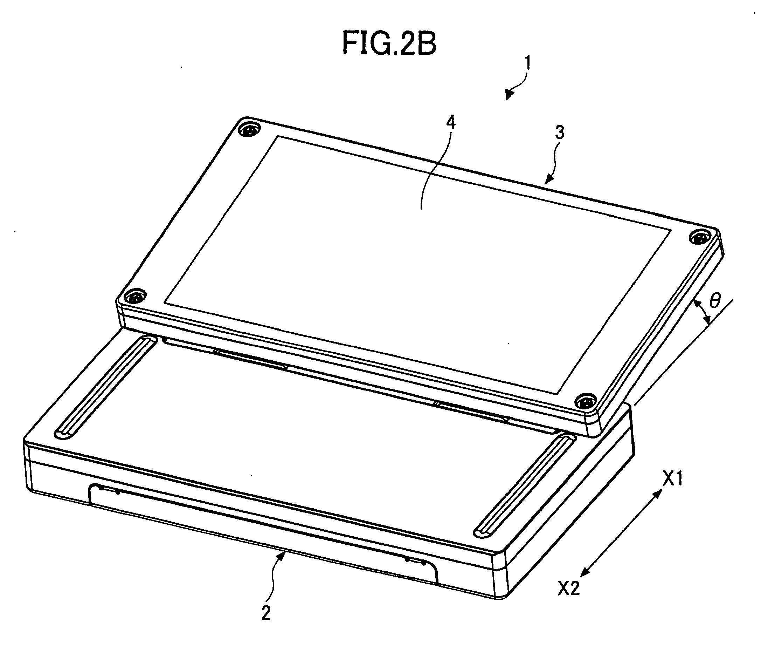

FIGS. 2A and 2B show a portable terminal apparatus 1 to which the sliding apparatus 10A is applied. The portable terminal apparatus 1 has a body 2 and a lid 3, to which lid 3 a liquid crystal display apparatus 4 is arranged. The base plate 11 of the sliding apparatus 10A is fixed to the body 2 and the sliding plate 12 is fixed to the lid 3.

FIG. 2A shows the portable terminal apparatus 1 when it is being carried. When it is being carried, the sliding plate 12 moves in the arrow X2 direction relative to the base plate 11. At this time, the lid 3 is superposed onto an upper part of the body 2, so that improvement of portability is achieved.

On the other hand, when the portable terminal apparatus 1 is to be used, the lid 3 is slid in the arrow X1 direction relative to the body 2. In this way, the sliding plate 12 which is fixed to the lid 3 slides in the arrow X1 direction relative to the base plate 11 which is fixed to the body 2. As described above, the sliding apparatus 10A of the present embodiment slides the sliding plate 12 in the X1 direction to provide a function of tilting upward the sliding plate 12 by an angle θ relative to the horizontal directions.

Thus, the lid 3 is slid in the X1 direction, so that, as shown in FIG. 2B, the lid 3 tilts upward by an angle θ relative to the body 2. In this way, the lid 3 in which the liquid crystal display apparatus 4 is provided tilts, making it possible to improve the viewability of the liquid crystal display apparatus 4.

In the explanations below, a state such that the sliding plate 12 is moved in the X2 direction toward the base plate 11 (a state such that the sliding plate 12 is not tilted) is called a closed state, a state such that the sliding plate 12 is moved in the X1 direction toward the base plate 11 (a tilted state) is called an open state, and further a state such that the sliding state 12 is located in between the closed state and the open state is called an intermediate state.

In the sliding apparatus 10A shown in FIGS. 1A and 1B, the base plate 11 is a plate-shaped member made of metal, both ends of which base plate 11 are bent, so that sliding guide sections 16A and 16B are formed. The sliding guide sections 16A and 16B of the base plate 11 respectively engage guide rail sections 18A and 18B of the sliding plate 12. Thus, the sliding plate 12 is guided by the sliding guide sections 16A and 16B, so that it is slidably supported in the arrow X1 and X2 directions in FIGS. 1A and 1B relative to the base plate 11.

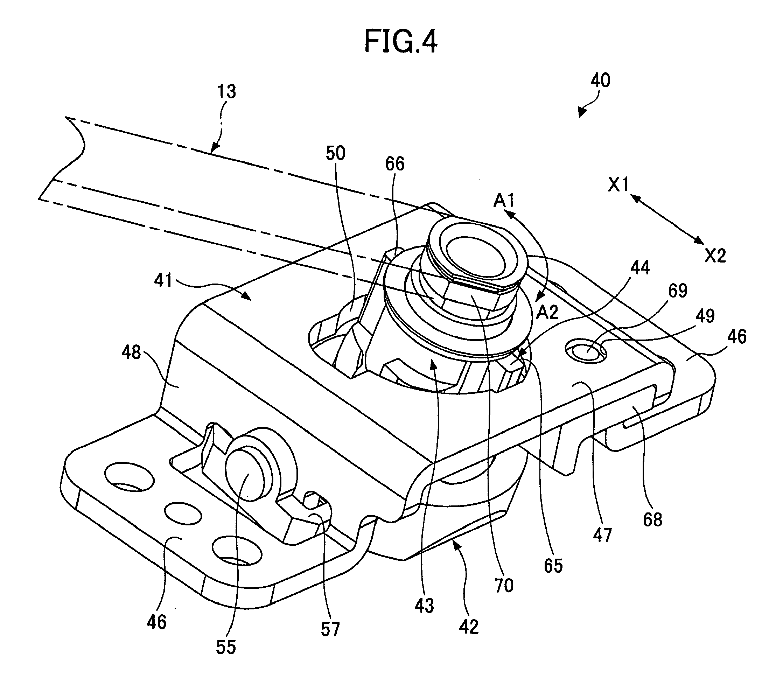

The base plate 11 is installed to a tip of a shaft 70 (generic) of the below-described tilting mechanism 40 (see FIG. 4). In this way, (as described below,) the base plate 11, which is integrated with the shaft 70, is arranged to tilt according to a tilt in an axial direction of the shaft 70 relative to a vertical direction.

The sliding plate 12 uses a flat rectangular metal plate in the present embodiment. At both side edges of the sliding plate 12 are formed the guide rail sections 18A and 18B which respectively engage the sliding guide sections 16A and 16B of the base plate 11.

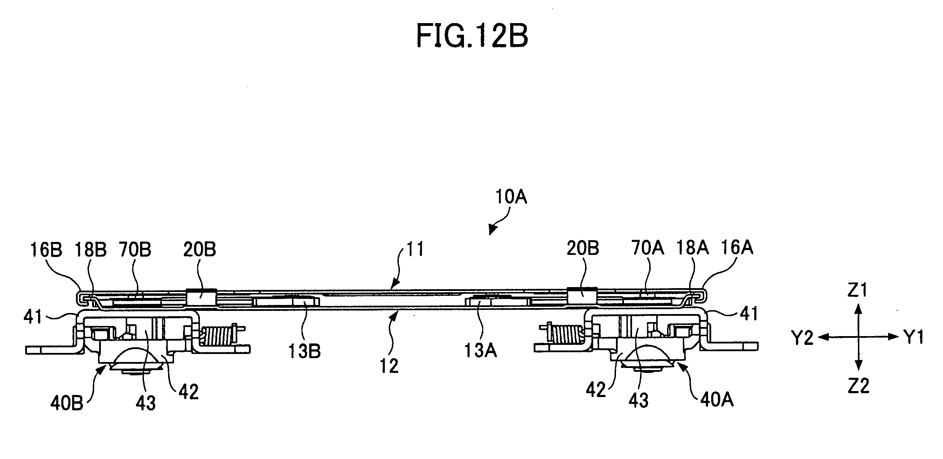

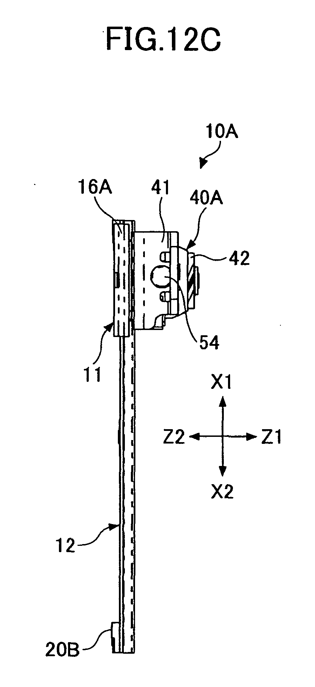

The sliding guide sections 16A and 16B are formed by bending both side edges of the sliding plate 12 in a generally Z shape (see FIG. 12B). The sliding guide sections 16A and 16B are formed such that they extend in sliding directions (the arrow X1 and X2 directions). Moreover, inside the guide rail sections 18A and 18B of the sliding plate 12 are formed elongated holes 19A and 19B which extend in the sliding directions (the arrow X1 and X2 directions).

The tilting mechanisms 40A and 40B which have the shafts 70A and 70B are arranged on the lower face side of the base plate 11, while the sliding plate 12 is arranged on the upper face side of the tilting mechanisms 40A and 40B. However, the shafts 70A and 70B extend to an upper face of the sliding plate 12, penetrating through the elongated holes 19A and 19B, which are formed in the sliding plate 12. The length of the elongated holes 19A and 19B in the X1 and X2 directions is set in correspondence with a sliding distance of the sliding plate 12 relative to the base plate 11.

Thus, in the sliding apparatus 10A in which the base plate 11, the sliding plate 12, and the tilting mechanisms 40A and 40B are arranged as described above, the shafts 70A and 70B do not prevent sliding operations of the sliding plate 12. In other words, when the sliding plate 12 slides relative to the base plate 11, the shafts 70A and 70B move relatively within the elongated holes 19A and 19B.

Moreover, the sliding plate 12 has a pair of stoppers 20A and a pair of stoppers 20B, which are respectively arranged on the upper-side and lower-side sides thereof. The pair of stoppers 20A is arranged at a position in the vicinity of the upper side on the X1 direction side of the sliding plate 12. Moreover, the pair of stoppers 20B is arranged at a position in the vicinity of the lower side on the X2 direction side of the sliding plate 12. In the closed state shown in FIG. 1A, the sliding plate 12 is energized in the X2 direction relative to the base plate 11 due to elastic force of spring members 13A and 13B. However, the stoppers 20A abut against the base plate 11, so that the sliding plate 12 is prevented from moving beyond the abutting position in the X2 direction.

Similarly, in the open state shown in FIG. 1B, the sliding plate 12 is energized in the X1 direction relative to the base plate 11 due to elastic force of the spring members 13A and 13B. However, the stoppers 20B abut against the base plate 11, so that the sliding plate 12 is prevented from moving beyond the abutting position in the X1 direction.

Next, the spring members 13A and 13B are described. The spring members 13A and 13B provide a function, as a spring, of elastically energizing the sliding plate 12 in a sliding direction relative to the base plate 11 and a function, as a connecting member, of connecting the sliding plate 12 and the tilting mechanisms 40A and 40B. One end of the spring member 13A is mounted on a supporting axle 21A which is provided at the sliding plate 12, while the other end is mounted on an elevating/lowering member 43 of the tilting mechanism 40A (see FIG. 4). Moreover, one end of the spring member 13B is mounted on a supporting axle 21B which is provided at the sliding plate 12, while the other end is mounted on the elevating/lowering member 43 of the tilting mechanism 40B.

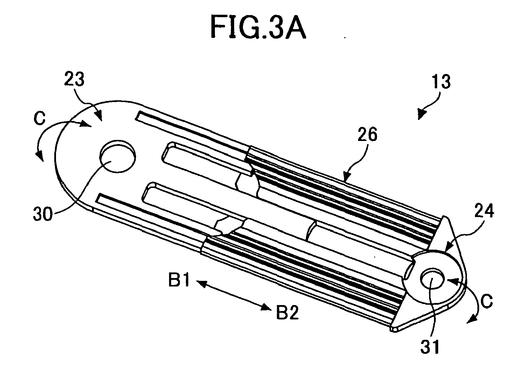

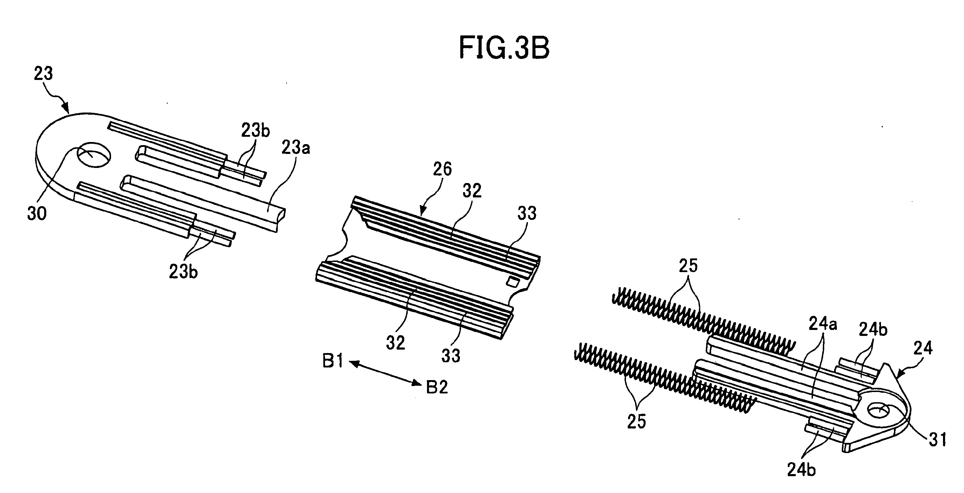

FIGS. 3A and 3B show a configuration of a spring member 13 (generic) in an enlarged manner. FIG. 3A is a perspective view of the spring member 13 in an assembled state, while FIG. 3B is an exploded perspective view of the spring member 13. A configuration of the spring member 13 is described below using FIGS. 3A and 3B as an explanation common to the spring members 13A and 13B, since the spring members 13A and 13B have the same configuration.

The spring member 13 has a main link 23, a sub-link 24, coil springs 25, and a spring guide case 26. The main link 23 and the sub-link 24 are resin molded items. At the main link 23, which is a member mounted on each of the tilting mechanisms 40A and 40B, are formed a sliding piece 23a, spring installing sections 23b, and a hole 30. Moreover, at the sub-link 24, which is a member to be mounted on each of the supporting axles 21A and 21B, are formed sliding piece 24a, spring installing sections 24b, and a hole 31.

The main link 23 and the sub-link 24 are arranged such that the sliding piece 23a and the sliding piece 24a oppose each other. At the main link 23 is formed one of the sliding pieces 23a, while at the sub-link 24 are formed two of the spring installing sections 24b. The sliding piece 23a is arranged to slidably engage between the spring installing sections 24b. Thus, the spring member 13 can extend and contract the whole length thereof by the sliding piece 23a and the spring installing section 24b relatively sliding in arrow B1 and B2 directions in FIGS. 3A and 3B.

In the present embodiment, four of the coil springs 25 are arranged. An end of each coil spring 25 on the arrow B1 direction side is installed in the spring installing section 23b of the main link 23, while an end on the B2 direction side is installed in the spring installing section 24b of the sub-link 24. Each of the coil springs 25 provides a function of energizing the main link 23 and the sub-link 24 in directions such that they are separated from each other.

The spring guide case 26 is arranged such as to form a spring guide section 32 by bending both sides of the rectangular metal plate such that they face inside. In a state such that the spring member 13 is assembled, the coil spring 25 is housed within the spring guide section 32 of the spring guide case 26. In this way, even when a coil spring 25 which is relatively long in the B1 and B2 directions is used, the coil spring 25 is prevented from buckling in a direction which is different from the sliding directions (the B1 and B2 directions).

Moreover, the spring guide case 2 6 prevents the main link 23 and the sub-link 24 from displacing in a direction (e.g., a direction shown with an arrow C in FIG. 3A) which is different from the sliding directions (the B1 and B2 directions). In this way, sliding operations of the main link 23 and the sub-link 24 can be performed accurately and smoothly. The spring guide case 26 is fixed to the sub-link 24 by caulking the edge 33 to the sub-link 24.

Furthermore, as described above, in the holes 30 which are formed in the corresponding main links 23 are mounted shafts 70A and 70B of the tilting mechanisms 40A and 40B. Moreover, the supporting axles 21A and 21B are inserted through the holes 31 which are formed in the corresponding sub-links 24. The spring members 13 (13A and 13B) are held by the supporting axles 21A and 21B so that they can move rotationally.

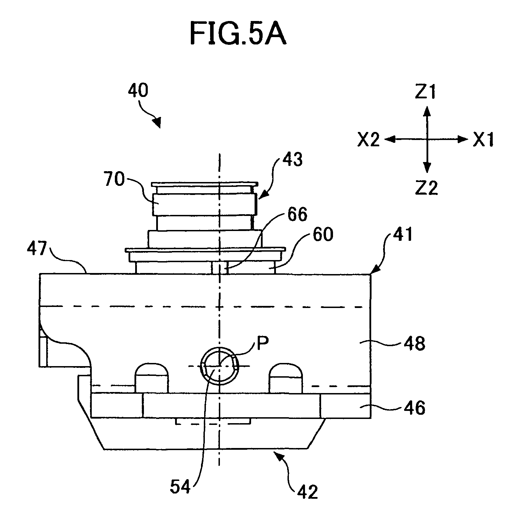

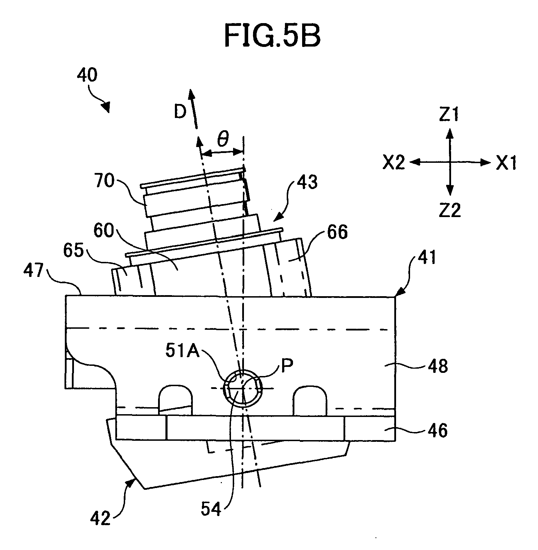

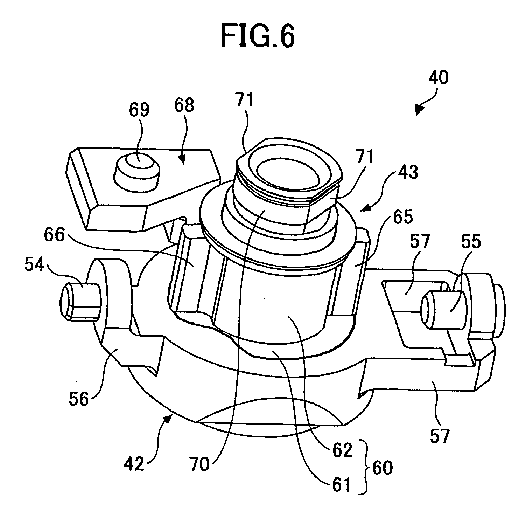

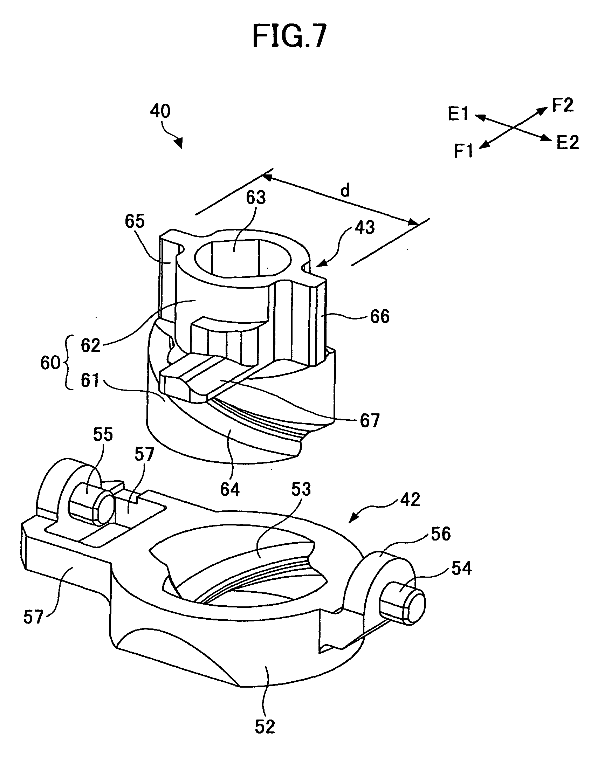

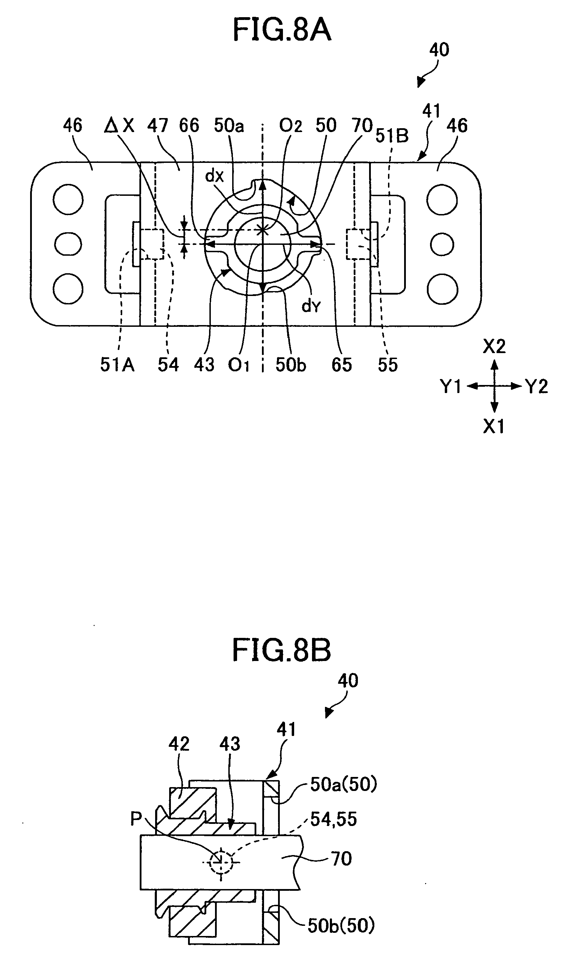

Next, the tilting mechanisms 40A and 40B are described using FIGS. 4 to 11B. The tilting mechanisms 40A and 40B have the same configuration, so that a configuration of a tilting mechanism 40 (generic) is described as an explanation common to the tilting mechanisms 40A and 40B using FIGS. 4 to 11B. FIGS. 4, 5A, and 5B are perspective and side views which show the tilting mechanism 40. FIGS. 6 and 7 are perspective and exploded perspective views which show the tilting mechanism 40 with a base platform 41 being removed. Moreover, FIGS. 8A to 11B are diagrams for explaining operations of the tilting mechanism 40.

The tilting mechanism 40 has the base platform 41, an oscillating frame 42, the elevating/lowering member 43, a cam mechanism 44, etc.

The base platform 41 is fixed to the body 2 of the portable terminal apparatus 1 to which the tilting mechanism 40 is installed. The base platform 41 has a fixed section 46, a table section 47, and a side face section 48 that are worked by bending a metal plate material.

At the fixed section 46, which is a member which is directly fixed to the body 2, is formed a hole for screwing. The side face section 48 is vertically erected relative to the fixed section 46, at which side face section 48 are formed axle holes 51A and 51B (see FIG. 8A) into which are inserted the below-described supporting axles 54 and 55. The table section 47 is provided at an upper part of the side face section 48. The table section 47 is arranged at a position which is higher than the fixed section 46. Moreover, below-described cam projecting sections 65 and 66, and a cam hole 50 which makes up a part of the cam mechanism 44 are formed at a generally central position.

A shape of the cam hole 50 is described using FIG. 8A. FIG. 8A is a plan view which shows a closed state of the tilting mechanism 40 shown in FIG. 4.

The cam hole 50 has a generally circular shape with an inner diameter dₓ relative to X1 and X2 directions and an inner diameter D_{Y} relative to Y1 and Y2 directions being of the same dimension (dₓ=D_{Y}). However, a central position (shown as O₁) of the inner diameter D_{Y} relative to the Y1 and Y2 directions and a central position (shown as O₂) of the inner diameter dₓ relative to the X1 and X2 directions are mutually displaced.

More specifically, in the present embodiment, a concave section 50a is formed at an inner peripheral edge in the X2 direction of the cam hole 50, while a convex section 50b is formed at an inner peripheral edge in the X1 direction of the cam hole 50. In the present embodiment, an amount of concavity of the concave section 50a and an amount of convexity of the convex section 50b are set equally. When the amount of concavity of the concave section 50a and the amount of convexity of the convex section 50b are shown with ΔX, the center position O₂ of the inner diameter dₓ relative to X1 and X2 directions is set such than it is displaced by ΔX in the X2 direction relative to the center position O₁ of the inner diameter d_{Y} relative to the Y1 and Y2 directions.

The oscillating frame 42 is a resin molded item. As shown in FIGS. 6 and 7, the oscillating frame 42 has a configuration such that a frame body 52, a receiving screw section 53, the supporting axles 54 and 55, and arm sections 56 and 57 are integrally formed therein. The receiving screw section 53 is formed at the center of the frame body 52. The below-described elevating/lowering members 43 are screwed into the receiving screw section 53 of the frame body 52 of the oscillating frame 42.

At one end of the frame body 52 is formed the arm section 56, at which arm section 56 the supporting axle 54 is formed. Moreover, at the other end of the frame body 52 is formed a pair of arm sections 57, at the center of which pair of arm sections is formed the supporting axle 55.

The elevating/lowering member 43 has a body 60 and the shaft 70. The body 60, which is a resin molded item, has a configuration such that a large diameter section 61 and a small diameter section 62 are coaxially molded in an integral manner. An inserting screw section 64 is formed at an outer peripheral portion of the large diameter section 61. The inserting screw section 64 of the elevating/lowering member 43 is arranged such that it screws into the receiving screw section 53 which is formed at the oscillating frame 42.

The small diameter section 62 is formed at an upper part of the large diameter section 61. A shaft installing hole 63 (see FIG. 7) is formed at the center of the small diameter section 62. Moreover, the cam projecting sections 65 and 66 which project outward and a rattling preventing lever 67 are formed at an outer periphery of the small diameter section 62.

The cam projecting sections 65 and 66 make up the cam mechanism 44 with the cam hole 50. The cam projecting sections 65 and 66 are formed such that they project outward from the small diameter section 62. The cam projecting sections 65 and 66 are arranged around an axis of the shaft installing hole 63 such that they are mutually separated by 180 degrees. Moreover, a separation distance d (shown with an arrow in FIG. 7) from one tip to the other tip of the cam projecting sections 65 and 66 is set such that it becomes somewhat larger compared to an inner diameter dₓ relative to X1 and X2 directions of the cam hole 50 and an inner diameter d_{Y} relative to Y1 and Y2 directions (d>dₓ, d>d_{y}). The cam projecting sections 65 and 66 are arranged such that the cam projecting sections 65 and 66 rotate within the cam hole 50 in conjunction with rotation of the elevating/lowering member 43.

The rattling preventing lever 67 is formed such that it projects from the small diameter section 62 in a direction (an arrow F1 direction in FIG. 7) which is generally orthogonal to projecting directions (arrow E1 and E2 directions in FIG. 7) of the cam projecting sections 65 and 66. The rattling preventing lever 67 is arranged to engage a rattling preventing member 68 (see FIGS. 4 and 6) which is provided at the base platform 41 in a closed state. In this way, in the closed state, rattling is prevented from occurring between the oscillating frame 42 and the elevating/lowering member 43.

The shaft 70 is a pipe-shaped metal member. The shaft 70 is fixed to the shaft installing hole 63 formed at the small diameter section 62. Fixing the shaft 70 to the shaft installing hole 63 is not particularly limited. For example, it may be fixed using pushing or gluing, or it may be fixed by insert-forming into the body 60. The shaft 70 and the body 60 need to rotate in an integral manner. For example, an outer periphery of the shaft 70 is knurled such that the shaft 70 eats into an inner wall of the shaft installing hole 63, making it possible to arrange the shaft 70 and the body 60 to integrally rotate.

Next, a method of assembling the tilting mechanism 40 is described.

When assembling the tilting mechanism 40, at first the rattling preventing member 68 is mounted on the base platform 41. The rattling preventing member 68, which is a resin molded item, is fixed to the base platform 41 by gluing, screwing, etc. Here, a rotation preventing projection 69, which is formed at the rattling preventing member 68, is engaged with a hole 49 which is provided at the base platform 41. In this way, when the rattling preventing lever 67 engages the rattling preventing member 68, it is made possible to prevent the rattling preventing member 68 from moving relative to the base platform 41.

The elevating/lowering member 43 is formed by fixing the shaft 70 to the shaft installing hole 63 of the body 60 (the small diameter section 62). The elevating/lowering member 43 is mounted on the oscillating frame 42. More specifically, the inserting screw section 64 which is formed at the elevating/ lowering member 43 is screwed into the receiving screw section 53 which is formed at the oscillating frame 42, so that the elevating/lowering member 43 is mounted on the oscillating frame 42. Thus, when the elevating/lowering member 43 rotates relative to the oscillating frame 42, the elevating/lowering member 43 is elevated/lowered relative to the oscillating frame 42.

When the elevating/lowering member 43 is being mounted on the oscillating frame 42, the oscillating frame 42 is mounted on the base platform 41. As mentioned above, the supporting axles 54 and 55 are provided at the oscillating frame 42, the supporting axle 54 is inserted into the axle hole 51A formed at the base platform 41, and the supporting axle 55 is inserted into the axle hole 51B. In this way, the oscillating frame 42 is arranged such that it is held by the base platform 41 and such that it can oscillate relative to the base platform 41.

Moreover, when the oscillating frame 42 is being mounted on the base platform 41, the cam projecting sections 65 and 66 which are formed at the elevating/lowering member 43 are being inserted within the cam hole 50 (see FIG. 4). The cam projecting sections 65 and 66 rotate within the cam hole 50, so that the cam projecting sections 65 and 66 are energized to an inner wall of the cam hole 50. In this way, the oscillating frame 42 and the elevating/lowering member 43 move between a state such that they are being held vertically erect relative to the base platform 41 shown in FIG. 5A and a state such that they are being tilted (being tilted by an angle θ) as shown in FIG. 5B. The tilting mechanism 40 is assembled according to the above-described operations.

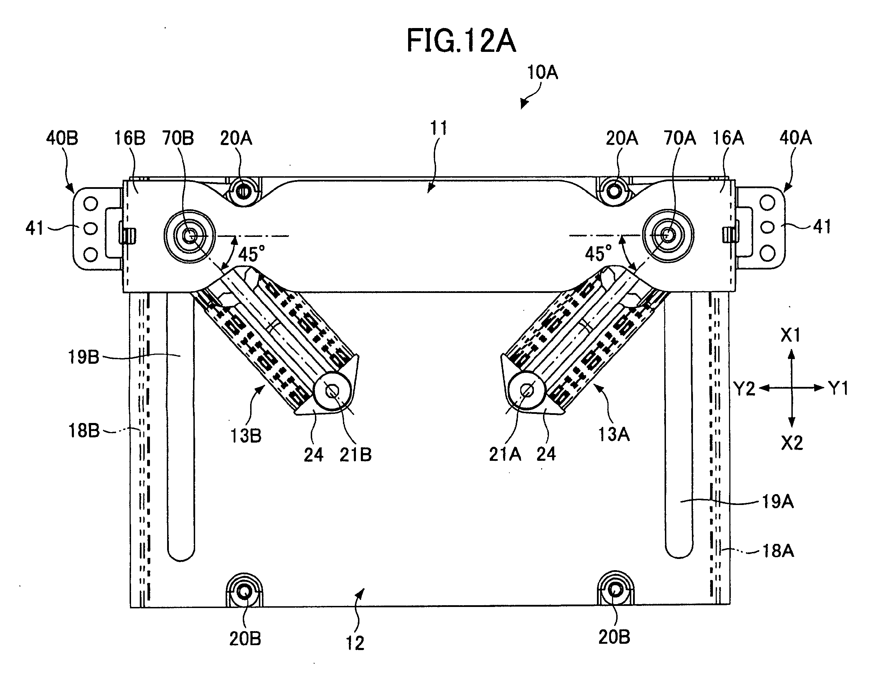

Next, using FIGS. 1A and 12A, a method of assembling the sliding apparatus 10A is described.

When assembling the sliding apparatus 10A, the spring members 13A and 13B are mounted on the sliding plates 12, at which are provided, in advance, the guide rail sections 18A and 18B, the elongated holes 19A and 19B, and the stoppers 20A and 20B. More specifically, the supporting axles 21A and 21B are inserted into the hole 31 (see FIG. 3A), which is formed at each sub-link 24 of the spring members 13A and 13B, and fixed to a predetermined assembling position provided at the sliding plate. Here, each sub-link 24 of the spring members 13A and 13B are arranged such that they can rotate relative to the supporting axles 21A and 21B. Positions shown with P in FIGS. 5A and 5B are rotational centers of the supporting axles 21A and 21B (In other words, rotational centers of the oscillating frame 42 and the elevating/lowering member 43).

Next, taking the tilting mechanisms 40A and 40B which are assembled as described above, the shafts 70A and 70B of the tilting mechanisms 40A and 40B are inserted into the elongated holes 19A and 19B. Moreover, the spring members 13A and 13B are mounted to the shafts 70A and 70B which project to the surface side of the sliding plate 12.

More specifically, the shafts 70A and 70B are inserted through the corresponding holes 30 (see FIG. 3A) formed at the main links 23 of the spring members 13A and 13B and the main links 23 are fixed to the shafts 70A and 70B. Here, the main links 23 are firmly fixed to the shafts 70A and 70B such that the spring members 13A and 13B do not rotate relative to the shafts 70A and 70B. In this way, the tilting mechanisms 40A and 40B (the shafts 70A and 70B) and the sliding plate 12 are arranged to be connected by the spring members 13A and 13B.

Next, the base plate 11 is installed on the sliding plate 12. More specifically, the base plate 11 is slid against and installed on the sliding plate 12 while the sliding guide sections 16A and 16B are engaged with the guide rail sections 18A and 18B. The shafts 70A and 70B as well as a predetermined shaft fixed position provided at the base plate 11 are positioned, after which the base plate 11 is attached to the tips of the shafts 70A and 70B.

In this way, the base plate 11 is fixed to the shafts 70A and 70B, so that, when the elevating/lowering member 43 tilts relative to the base platform 41, the base plate 11 also tilts in accordance therewith. Moreover, the sliding plate 12 slides, guided by the sliding guide sections 16A and 16B which are formed at the base plate 11. Thus, when the base plate 11 tilts, the sliding plate 12 also tilts in conjunction therewith. The sliding apparatus 10A is assembled according to the above-described operations.

Now, operations of the tilting mechanism 40 (40A and 40B) and the sliding apparatus 10A are described using FIGS. 8A to 11B and FIGS. 12A to 14C.

FIGS. 8A to 11B show an operation of the tilting mechanism 40, while FIGS. 12A to 14C show an operation of the sliding apparatus 10A. Below, operations from a closed state to an open state of the sliding apparatus 10A are described. Operations from an open state to a closed state of the sliding apparatus 10A are merely in reverse of below-described operations, so that explanations thereof are omitted.

FIGS. 8A and 12A show the tilting mechanism 40 (40A and 40B) in the closed state and the sliding apparatus 10A in the closed state.

From the closed state, the sliding plate 12 slides in the arrow X2 direction relative to the base plate 11. The spring members 13A and 13B energizes elastic force, so that they expand. In this way, the sliding plate 12 is moved and energized in the arrow X2 direction by the spring members 13A and 13B.

However, the stoppers 20A, which are provided at the sliding plate 12, abut against the base plate 11, so that a further sliding operation is regulated. In this way, the sliding plate 12 is engaged with the base plate 11. Moreover, in the closed state, supposing line segments which pass through corresponding centers of the shafts 70A and 70B and which are parallel in Y1 and Y2 directions, the spring members 13A and 13B are tilted 45 degrees in a downward direction relative to each line segment.

Moreover, as shown in FIG. 8A, in the closed state, the cam projecting sections 66 and 65 face the arrows Y1 and Y2 directions within the cam hole 50. Thus, the center position of the shaft 70 is arranged at a center position O₁ of the inner diameter d_{Y} relative to the Y1 and Y2 directions of the cam hole 50. In the closed state, as shown in FIG. 8B, the oscillating frame 42 and the elevating/lowering members 43 are being held vertically erect (or, in other words, facing a direction perpendicular to an X-Y coordinate plane). In FIGS. 8B, 9B, 10B, and 11B, a direction toward the right is the vertically-erect direction. Thus, the base plate 11 and the sliding plate 12 are not being tilted.

Moreover, in the closed state, the rattling preventing lever 67, which is provided at an outer periphery of the small diameter section 62, is arranged such that it engages the rattling preventing member 69 which is provided at the base platform 41. As described above, a separation distance d between the tips of the cam projecting sections 65 and 66 is set such that it becomes somewhat larger than the inner diameter d_{Y} relative to the Y1 and Y2 directions of the cam hole 50 (d>d_{Y}).

Thus, a clearance exists between the cam projecting sections 65 and 66 and the inner peripheral face of the cam hole 50, so that rattling could occur between the cam projecting sections 65, 66, and the cam hole 50. However, in the present embodiment, the rattling preventing lever 67 is engaged with the rattling preventing member 68, so that, even when the clearance exists, rattling does not occur between the cam projecting sections 65 and 66 and the cam hole 50.

In the above-described closed state, the sliding plate 12 is slid toward the arrow X1 direction. The sliding plate 12 is slid in the X1 direction, so that the supporting axles 21A and 21B also move in the X1 direction. In this way, the spring members 13A and 13B rotate around corresponding axles of the shafts 70A and 70B. More specifically, the spring member 13A rotates in a clockwise direction around the axle of the shaft 70A, while the spring member 13B rotates in a counterclockwise direction around the axle of the shaft 70B.

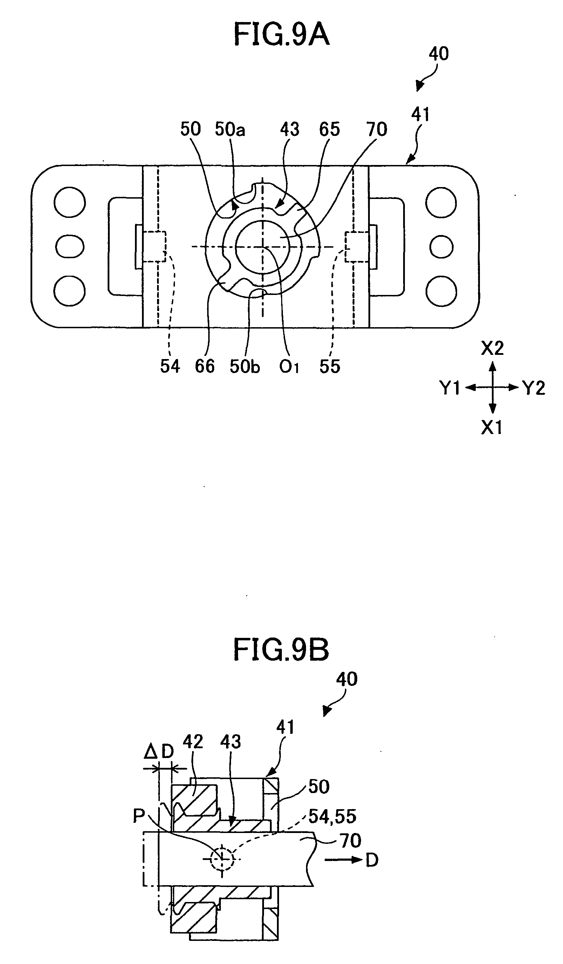

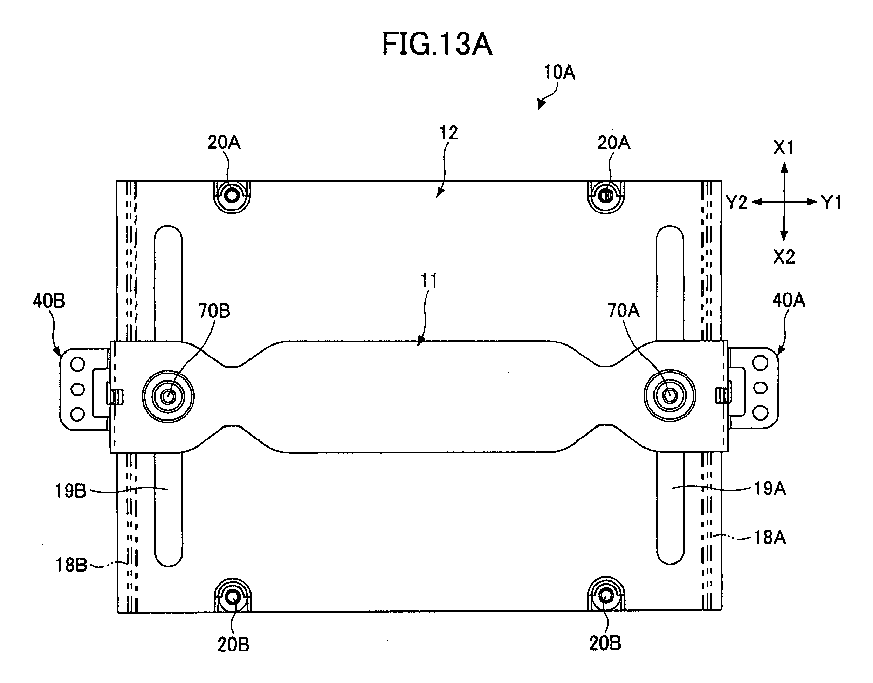

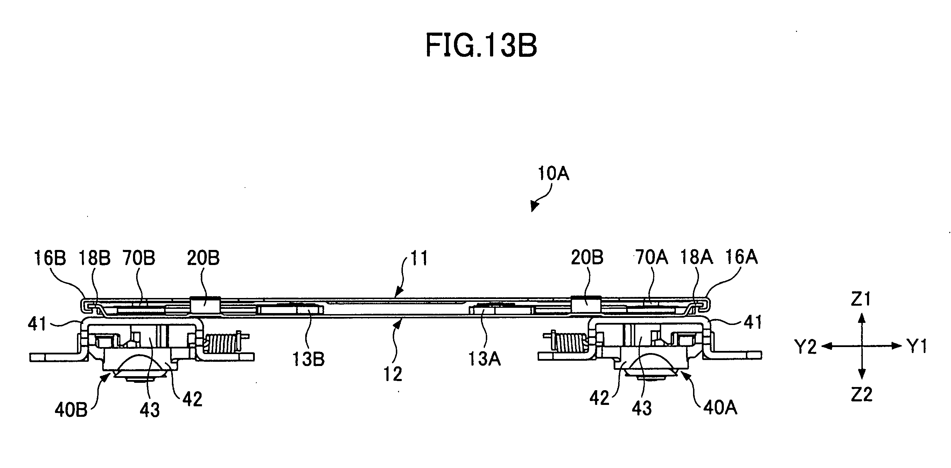

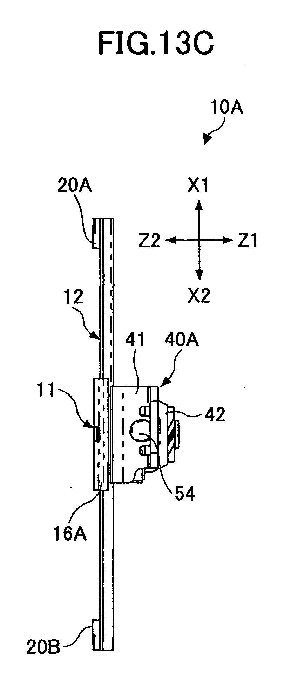

FIGS. 9A and 13A show a state (an intermediate state) in which the sliding plate 12 slides to a position such that the spring members 13A and 13B form a straight line shape in the Y1 and Y2 directions.

In the intermediate state, the spring members 13A and 13B rotate by 45 degrees relative to the closed state shown in FIG. 12A. As described above, the spring members 13A and 13B are connected to the shafts 70A and 70B, so that rotating of the spring members 13A and 13B causes the elevating/lowering member 43 to also rotate.

The elevating/lowering member 43 is screwed into the oscillating frame 42. Thus, the elevating/lowering member 43 advances by rotating relative to the oscillating frame 42 and elevates in an arrow D direction in FIG. 9B relative to the oscillating frame 42. In the present embodiment, the spring members 13A and 13B rotate by 45 degrees, so that the elevating/lowering member 43 elevates by ΔD (see FIG. 9B) relative to the closed state (shown with a short dash line in FIG. 9B).

Moreover, a shape of the cam hole 50 is formed such that, when the cam projecting sections 65 and 66 rotate from the closed state to the open state, the center of rotation thereof becomes a center position O₁. Thus, the base plate 11 and the sliding plate 12 are not tilted, maintaining a state of being erect vertically even when the spring members 13A and 13B rotate in conjunction with sliding of the sliding plate 12. In the intermediate state, the spring members 13A and 13B form a straight line shape in the Y1 and Y2 directions, so that, momentarily, elastic force of the spring members 13A and 13B, does not act on the sliding plate 12.

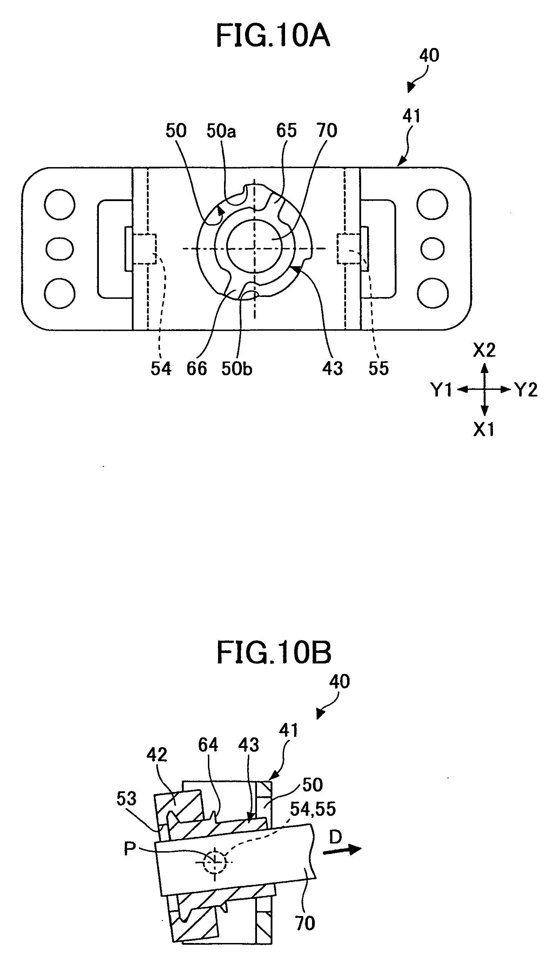

FIGS. 10A and 10B show a state such that the sliding plate 12 is slid in the X1 direction relative to the intermediate state. Moving the sliding plate 12 in the X1 direction relative to the intermediate state reverses a direction of energizing elastic force by the spring members 13A and 13B relative to the sliding plate 12. In this way, even when the operator does not push the sliding plate 12, the sliding plate 12 automatically slides in the X1 direction due to the elastic force of the spring members 13A and 13B.

Moreover, for an inner wall of the cam hole 50, a region in which the cam projecting section 66 rotates from an intermediate position 1 to the closed position is arranged to have a shape such that it gradually projects toward inside. Moreover, for the inner wall of the cam hole 50, a region in which the cam projecting section 65 rotates from the intermediate position 1 to the open position is arranged to have a shape such that it gradually recedes relative to outside.

Thus, when the sliding plate 12 slides in the X1 direction relative to the intermediate state, **and, in conjunction therewith, the** elevating/lowering member 43 rotates due to the spring members 13A and 13B, the cam projecting section 66 slidingly contacts a position which projects towards inside of the cam hole 50, and the cam projecting section 65 slidingly contacts a position which recedes relative to the outside of the cam hole 50. In this way, the elevating/lowering member 43 is energized in the arrow X2 direction in FIG. 10A by the cam mechanism 44 which includes the cam hole 50 and the cam projecting sections 65 and 66.

As described above, the elevating/lowering member 43 is mounted on the oscillating frame 42, which is oscillatably mounted on the base platform 43. Thus, the elevating/lowering member 43 is energized in the X2 direction, so that the oscillating frame 42 oscillates. Therefore, the base plate 11 which is mounted on the shaft 70 starts to tilt with an oscillation of the elevating/lowering member 43. Here, the spring members 13A and 13B continue to rotate, so that an elevating operation (movement in the arrow D direction) of the elevating/lowering member 43 relative to the oscillating frame 42 of the elevating/lowering member 43 is continuously performed.

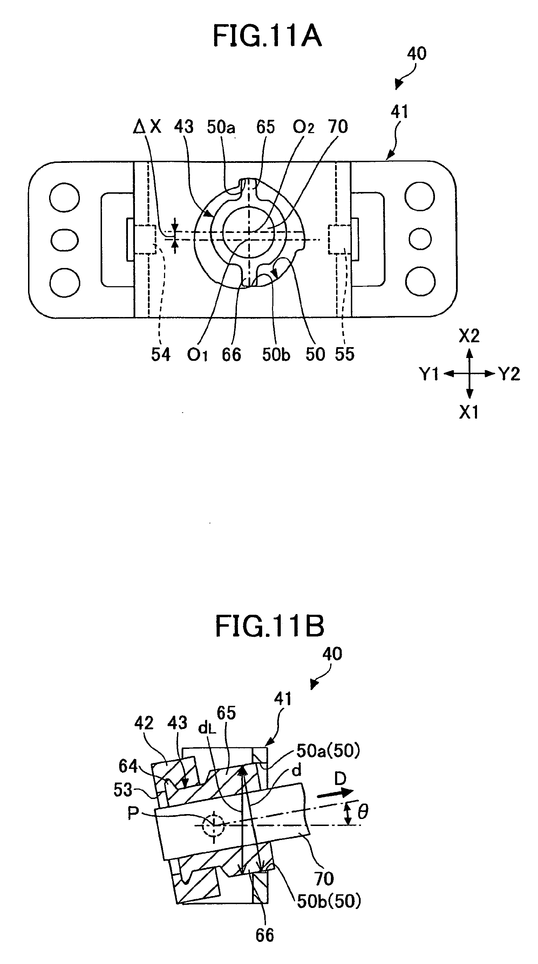

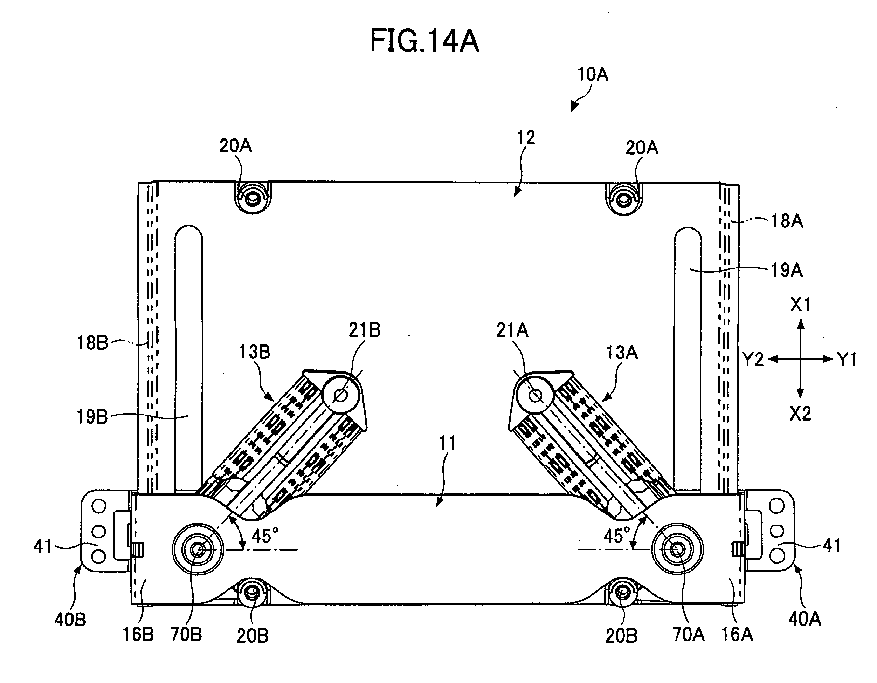

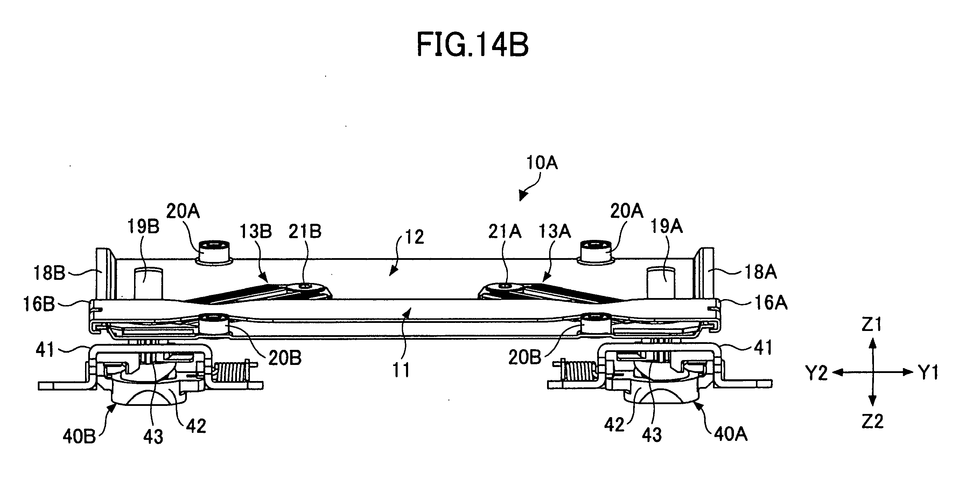

FIGS. 11A and 14A show the tilting mechanism 40 (40A and 40B) in the open state and a sliding apparatus 10A in the open state.

In the open state, the sliding plate 12 slides in the arrow X1 direction relative to the base plate 11. Moreover, beyond the intermediate state, a direction of acting of elastic force of the spring members 13A and 13B reverses, while, in the open state, the spring members 13A and 13B energize the sliding plate 12 in the arrow X1 direction. However, the stopper 20B abuts against the base plate 11, so that the sliding plate 12 is being engaged to the base plate 11 at the abutting position.

Moreover, in the closed state, supposing line segments which pass through the centers of the shafts 70A and 70B and which are parallel in the arrow Y1 and Y2 directions, the spring members 13A and 13B become tilted 45 degrees in an upward direction relative to the line segments. Thus, in the present embodiment, each of the spring members 13A and 13B is arranged to rotate by 90 degrees while the sliding plate 12 moves from the closed state to the open state.

On the other hand, as shown in FIG. 11A, in the open state, the cam projecting sections 66 and 65 are positioned such that they face the arrow X1 and X2 directions within the cam hole 50. Here, the center position of the shaft 70 is arranged at a center position O₂ of the inner diameter dₓ relative to X1 and X2 directions of the cam hole 50. As described above, a concave section 50a is formed at an inner peripheral edge in the X2 direction of the cam hole 50, while a convex section 50b is formed at an inner peripheral edge in the X1 direction of the cam hole 50. In the open state, the cam projecting section 65 engages to the concave section 50a, while the cam projecting section 66 is engaged with the convex section 50b.

Thus, the center position of the shaft 70 in the open state is arranged at the center position O₂ of the inner diameter dₓ relative to the X1 and X2 directions. The center position O₂ of the shaft 70 in the open state is displaced by ΔX in the arrow X2 direction in FIG. 11A relative to the center position O₁ of the shaft 70 in the closed state in FIG. 8A.

In this way, the center of the shaft 70 is displaced by ΔX in the X2 direction, so that the elevating/lowering member 43 on which the shaft 70 is mounted is also moved and energized in the X2 direction. In this way, as shown in FIG. 11B, the elevating/lowering member 43 (the shaft 70) rotates around a rotational center P of the oscillating frame 42, so that it is tilted.

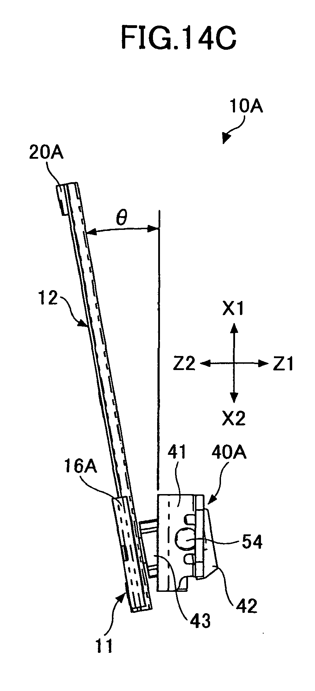

Moreover, the base plate 11 is attached to the shaft 70. Thus, the shaft 70 is tilted, so that the base plate 11 and the sliding plate 12 slidably mounted thereto also tilt. In this way, as shown in FIG. 14C, the sliding plate 12 is being tilted by an angle θ relative to horizontal directions (the X1 and X2 directions). Thus, when the sliding apparatus 10A is applied to the portable terminal apparatus 1, the lid 3 is tilted, making it possible to improve viewability of the liquid crystal display apparatus 4 (see FIG. 2B).

Moreover, in the present embodiment, an example is shown of tilting by an angle θ relative to the horizontal direction. (The angle θ is called a tilt angle.) The tilt angle θ can be adjusted by appropriately selecting an angle of rotation of the spring members 13A and 13B (90 degrees in the present embodiment), an amount of concavity of the concave section 50a and an amount of convexity of the convex section 50b at the cam hole 50, a distance to a position at which the cam projecting sections 65 and 66 slidingly contact the cam hole 50 from the rotational center P of the oscillating frame 42, etc.

Moreover, in the open state, the rattling preventing lever 67 is separated from the rattling preventing member 68. In the closed state, the elevating/lowering member 43 is vertically erected, so that a clearance occurs between the cam projecting sections 65 and 66 and the cam hole 50. In order to prevent rattling which is caused thereby, a configuration is adopted such that the rattling preventing lever 67 is engaged with the rattling preventing member 68.

However, in the open state, the elevating/lowering member 43 is being tilted, so that, as shown in FIG. 11B, a distance d_{L} between sliding contact positions at which the tilted elevating/lowering member 43 slidingly contacts an inner wall of the cam hole 50 become larger than a separating distance d of a pair of cam projecting sections 65 and 66 (d_{L} > d). Thus, rattling does not occur as the cam projecting sections 65 and 66 slidingly contact the inner wall of the cam hole 50 in a firm manner even when the rattling preventing lever 67 and the rattling preventing member 68 are not provided.

As described above, according to the tilting mechanisms 40 (40A and 40B) and the sliding apparatus 10A of the present embodiment, in conjunction with movement of the sliding plate 12 from the closed state to the open state, the sliding plate 12 automatically performs a tilting operation driven by the tilting mechanisms 40A and 40B. Thus, operability may be improved relative to a configuration in which the tilting operation is manually performed.

Moreover, the tilting mechanisms 40A and 40B are arranged such that the elevating/lowering members 43 rotate with the rotation of the spring members 13A and 13B which are connected to the sliding plate 12, making it possible to accurately synchronize the tilting operation of the sliding plate 12.

Moreover, according to the tilting mechanisms 40A and 40B of the present embodiment, a tilting operation is performed while the elevating/lowering member 43 elevates relative to the base platform 41, making it possible to accurately tilt the sliding plate 12 even when the angle of rotation of the elevating/lowering member 43 is small (90 degrees in the present embodiment).

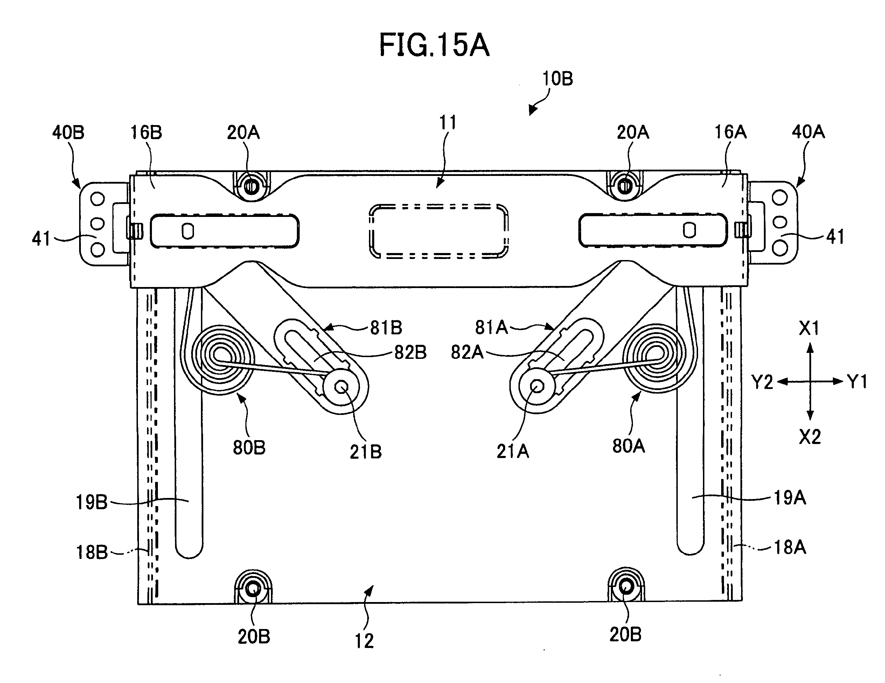

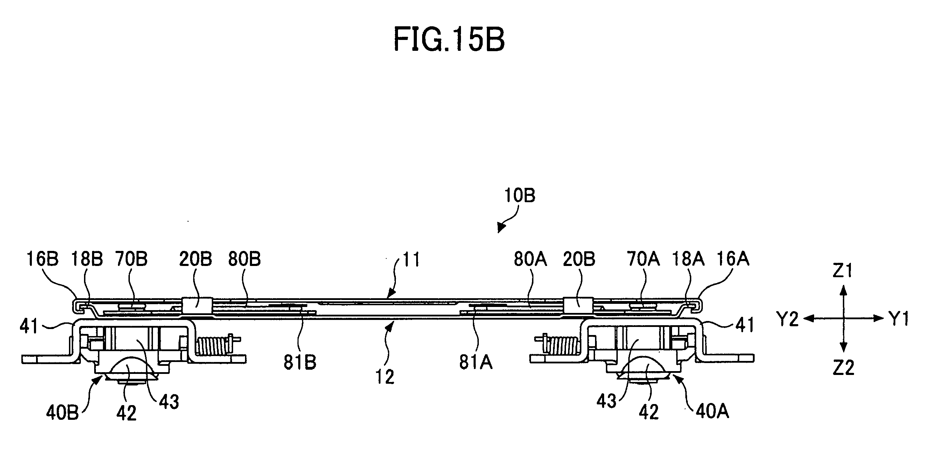

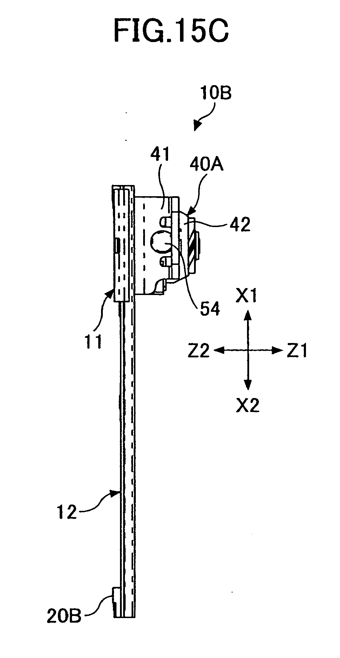

FIGS. 15A to 17C show a sliding apparatus 10B of another embodiment.

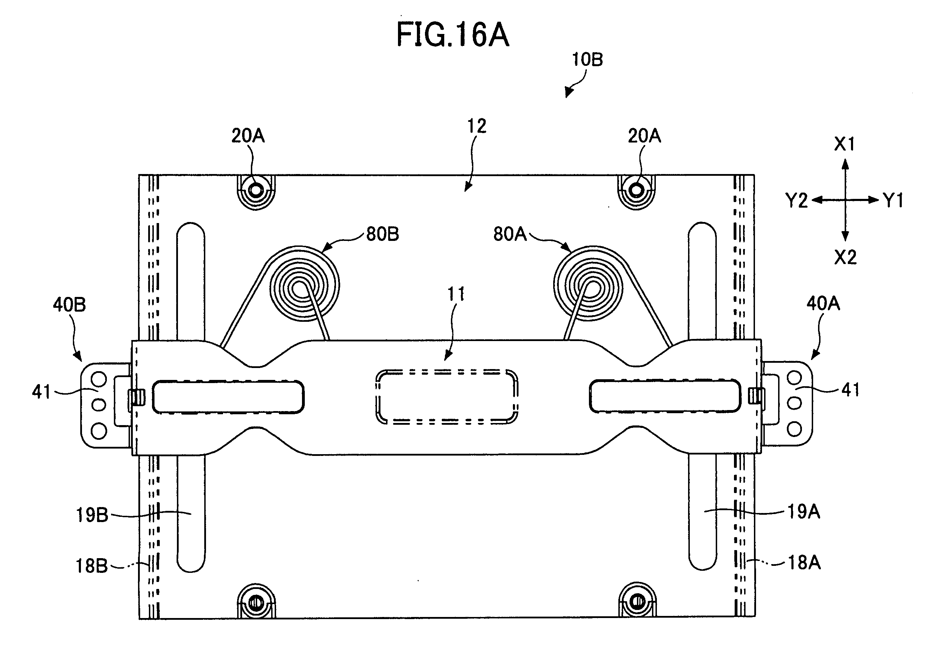

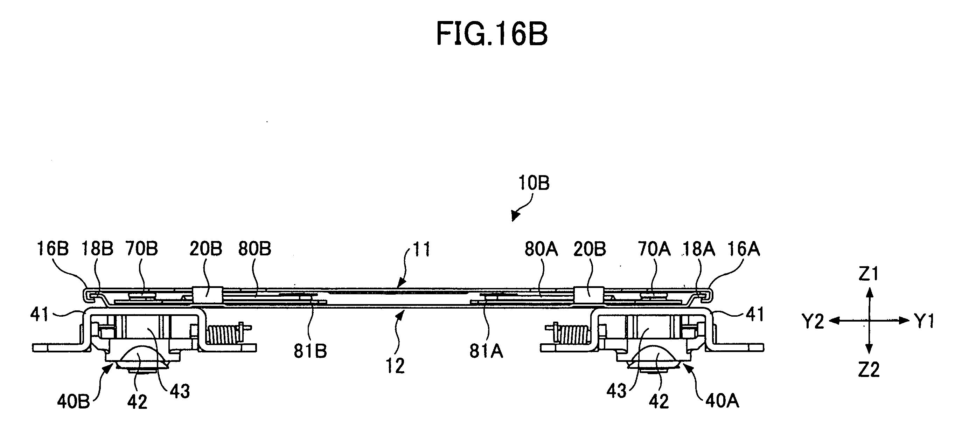

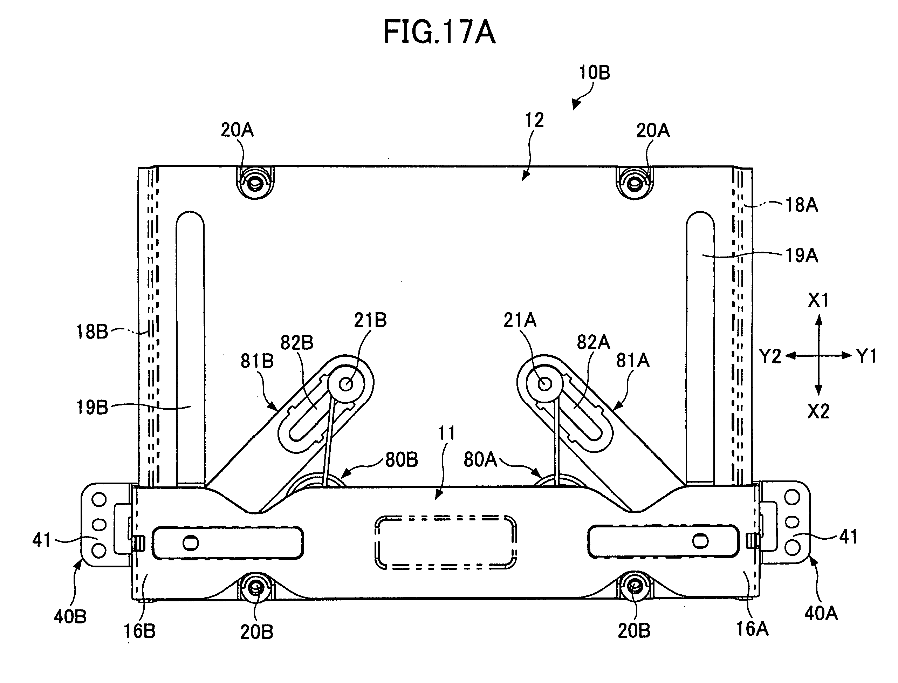

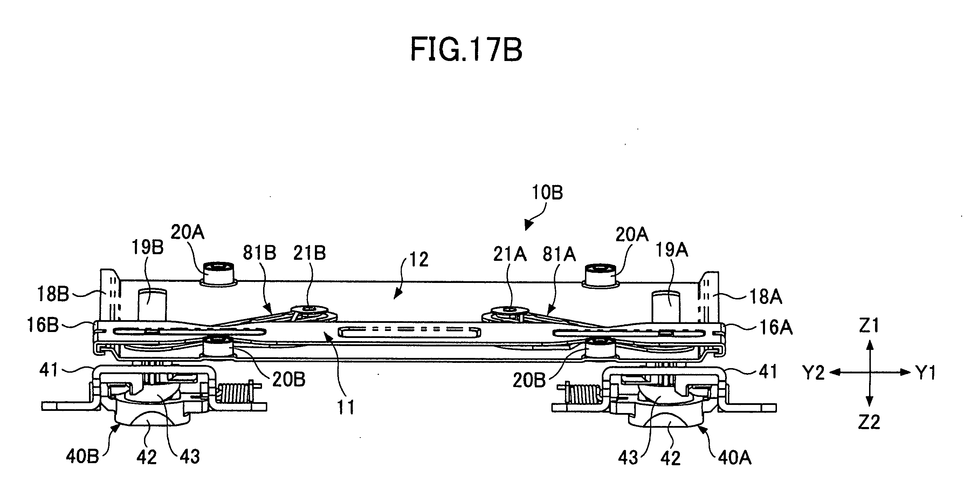

FIGS. 15A to 15C show the sliding apparatus 10B in the closed state. FIGS. 16A to 16C show the sliding apparatus 10B in the intermediate state. FIGS. 17A to 17C show the sliding apparatus 10B in the open state. In FIGS. 15A to 17C, same letters are applied to features corresponding to features of the above-described embodiments shown in FIGS. 1A to 14C, so that explanations are omitted.

As a member which elastically energizes the sliding plate 12 relative to the base plate 11, the spring members 13A and 13B are used. The spring members 13A and 13B provide a function, as springs, of elastically energizing the sliding plate 12 in a sliding direction relative to the base plate 11 and a function, as a connecting member, of connecting the sliding plate 12 and the tilting mechanisms 40A and 40B at the same time.

However, there is not necessarily a need for one member to have a function as a spring and a function as a connecting member, so that they may be realized with respectively separate members. The sliding apparatus 10B of the present embodiment is arranged such that the function of the spring is realized with helical torsion coil springs 80A and 80B and the function as the connecting member is realized with connecting arms 81A and 81B.

The helical torsion coil springs 80A and 80B have first ends thereof fixed to the respective supporting axles 21A and 21B of the sliding plate 12 and the other ends thereof fixed to predetermined positions of the base plate 11 (in the present embodiment, positions at which the shafts 70A and 70B are attached to the base plate 11). Each of the helical torsion coil springs 80A and 80B elastically energizes the sliding plate 12 in the closed state such that it is moved in the arrow X2 direction.

The fixing positions of ends of the helical torsion coil springs 80A and 80B are not limited to the present embodiment, so that they may be fixed to other positions as long as the first ends are fixed to the sliding plate 12 and the other ends are fixed to the base plate 11. The helical torsion coil springs 80A and 80B need to energize the sliding plate 12 in the X2 direction in the closed state and energize the sliding plate 12 in the X1 direction in the open state with the intermediate state as a border.

On the other hand, elongated holes 82A and 82B which extend in the longitudinal direction are formed at the connecting arms 81A and 81B. The supporting axles 21A and 21B are inserted through the elongated holes 82A and 82B, respectively, so as to be implanted in the sliding plate 12. Thus, the connecting arms 81A and 81B are arranged to have first ends supported by the supporting axles 21A and 21B such that the supporting axles 21A and 21B can move relatively within the elongated holes 82A and 82B.

Moreover, the other ends of the connecting arms 81A and 81B are fixed to the shafts 70A and 70B which are provided at the tilting mechanisms 40A and 40B. Therefore, the connecting arms 81A and 81B rotate, so that the elevating/lowering members 43 are rotated via the shafts 70A and 70B. Thus, the connecting arms 81A and 81B may be rotated to cause the tilting mechanisms 40A and 40B to perform tilting operations.

Now, an operation of the sliding apparatus 10B is described.

In the closed state shown in FIGS. 15A to 15C, when the sliding plate 12 is slid such that it faces the arrow X1 direction, the supporting axles 21A and 21B also move in the X1 direction. In this way, the supporting axles 21A and 21B relatively move within the elongated holes 82A and 82B so as to rotate the connecting arms 81A and 81B. More specifically, the connecting arm 81A rotates in a clockwise direction around the axle of the shaft 70A, while the connecting arm 81B rotates in a counterclockwise direction around the axle of the shaft 70B.

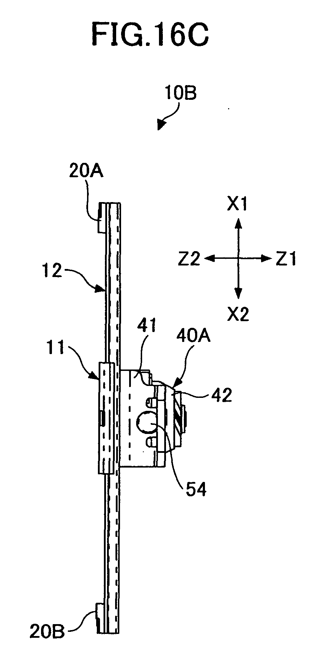

FIGS. 16A and 16C show an intermediate state in which the sliding plate 12 slides to a position such that the connecting arms 81A and 81B form a straight line shape in Y1 and Y2 directions. Moving the sliding plate 12 in the X1 direction relative to the intermediate state reverses a direction of energizing elastic force by the helical torsion coil springs 80A and 80B relative to the sliding plate 12. In this way, even in this embodiment, even when the operator does not push the sliding plate 12, the sliding plate 12 automatically slides in the X1 direction due to the elastic force of the helical torsion coil springs 80A and 80B.

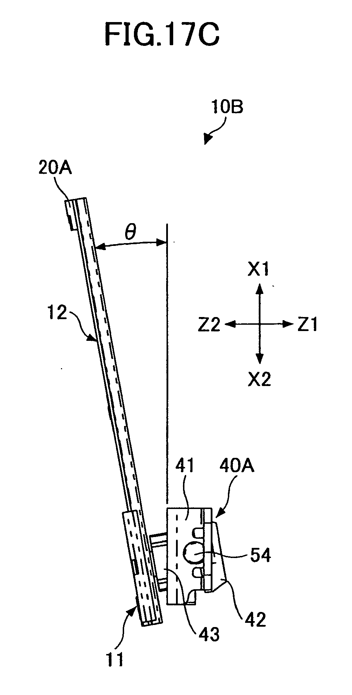

FIGS. 17A to 17C show the sliding apparatus 10B in the open state. In the open state, the sliding plate 12 slides in the X1 direction relative to the base plate 11. Even in the present embodiment, each of the connecting arms 81A and 81B is arranged to rotate 90 degrees while the sliding plate 12 moves from the closed state to the open state. Thus, the elevating/lowering member 43 (the shaft 70) is being tilted, rotating around the rotational center P of the oscillating frame 42, and the sliding plate 12 is being tilted relative to the horizontal directions (X1 and X2 directions) as shown in FIG. 17C.

Thus, even when the sliding apparatus 10B of the present embodiment is applied to the portable terminal apparatus 1, the lid 3 is tilted, making it possible to improve the viewability of the liquid crystal display apparatus 4 (see FIG. 2B). Moreover, in conjunction with movement of the sliding plate 12 from the closed state to the open state, the sliding plate 12 automatically performs a tilting operation driven by the tilting mechanisms 40A and 40B. Thus, operability may be improved relative to a configuration in which the tilting operation is manually performed.

Moreover, the tilting mechanisms 40A and 40B are arranged such that the elevating/lowering members 43 rotate by rotation of the connecting arms 81A and 81B which are connected to the sliding plate 12, making it possible to accurately synchronize the sliding operation of the sliding plate 12 and the tilting operation of the sliding plate 12.

While preferred embodiments of the present invention have been described in detail, the present invention is not limited to the above-described specific embodiments, so that variations and changes are possible within the scope of the present invention that is recited in the claims.

The present international application is based on Japanese Patent Application No. 2009-134996 filed on June 4, 2009.

## Claims

1. A tilting mechanism (40), comprising:
a base platform (41);
an oscillating frame (42) which is oscillatably mounted on the base platform (41);
an elevating/lowering member (43) which is mounted on the oscillating frame (42) and which is configured to perform elevating/lowering operations with respect to the oscillating frame (42) by rotating; and
**characterized in that** it comprises a cam mechanism (44) which is configured to energize the elevating/lowering member (43) such that the elevating/lowering member (43) is tilted relative to the base platform (41) in conjunction with the rotating of the elevating/lowering member (43), the cam mechanism (44) including a cam section which is formed at an inner wall of an opening formed at the base platform (41) and a projecting section (55, 56) which extends toward outside the elevating/lowering member (43) and which is configured to engage the cam section.

2. The tilting mechanism (40) as claimed in claim 1, wherein the elevating/lowering member (43) is arranged to elevate/lower relative to the oscillating frame (42) in conjunction with the rotating of the elevating/lowering member (43) due to the elevating/lowering member (43) being screwed into the oscillating frame (42).

3. A sliding apparatus (10), comprising:
a base plate (11); a sliding plate (12) which is in a sliding arrangement relative to the base plate (11); a spring member (13) which is configured to energize the sliding plate (12) relative to the base plate (11); and a tilting mechanism (40), wherein the tilting mechanism includes
a base platform (41);
an oscillating frame (42) which is oscillatably mounted on the base platform (41);
an elevating/lowering member (43) which is mounted on the oscillating frame (42) and which is adapted to perform elevating/lowering operations with respect to the oscillating frame (42) by rotating;
**characterized in that** it comprises a cam mechanism (44) which is configured to energize the elevating/lowering member (43) such that the elevating/lowering member (43) is tilted relative to the base platform (41) in conjunction with the rotating of the elevating/lowering member (43), the cam mechanism (44) including a cam section which is formed at an inner wall of an opening formed at the base platform (41) and a projecting section (55, 56) which extends toward outside the elevating/lowering member (43) and which is configured to engage to the cam section, wherein the base plate (41) is attached to the tilting mechanism (40), a connecting member is provided between the elevating/lowering member (43) of the tilting mechanism (40) and the sliding plate (12), and the sliding plate (12) is slid relative to the base plate (11), so that the elevating/lowering member (43) rotates via the connecting member and the base plate (11) is tilted by the tilting mechanism (40).

4. The sliding apparatus (10) as claimed in claim 3, wherein the spring member (13) is a helical torsion coil spring which has one end fixed to the base plate (11) and the other end fixed to the sliding plate (12).

## Patentansprüche

1. Kippmechanismus (40) mit:
einer Basisplattform (41);
einem Schwenkrahmen (42), der schwenkbar an der Basisplattform (41) angebracht ist;
einem Anhebe-/Abhebeelement (43), das an dem Schwenkrahmen (42) angebracht ist und dafür ausgestaltet ist, Anhebe-/Absenkbetätigungen bezüglich des Schwenkrahmens (42) durch Drehen durchzuführen; und
**dadurch gekennzeichnet, dass** er einen Nockenmechanismus (44) aufweist, der dafür ausgestaltet ist, dass er das Anhebe-/Absenkelement (43) so betätigt, dass das Anhebe-/Absenkelement (43) bezüglich der Basisplattform (41) zusammen mit der Drehung des Anhebe-/Absenkelements (43) gekippt wird, wobei der Nockenmechanismus (44) eine Nockensektion, die an einer inneren Wand einer Öffnung, die an der Basisplattform (41) ausgebildet ist, ausgebildet ist, und eine Vorstehsektion (55, 56) aufweist, die sich zur Außenseite des Anhebe-/Absenkelements (43) erstreckt und die dafür ausgestaltet ist, mit der Nockensektion in Eingriff zu treten.

2. Kippmechanismus (40) nach Anspruch 1, wobei das Anhebe-/Absenkelement (43) dafür angeordnet ist, sich bezüglich des Schwenkrahmens (42) zusammen mit dem Drehen des Anhebe-/Absenkelements (43) anzuheben/abzusenken, da das Anhebe-/Absenkelement (43) mit dem Schwenkrahmen (42) verschraubt ist.

3. Kippmechanismus (10) mit: einer Basisplatte (11); einer Gleitplatte (12), die in einer Gleitanordnung bezüglich der Basisplatte (11) ist; einem Federelement (13), welches dafür ausgestaltet ist, die Gleitplatte (12) bezüglich der Basisplatte (11) zu betätigen; und einem Kippmechanismus (40), wobei der Kippmechanismus aufweist:
eine Basisplattform (41);
einen Schwenkrahmen (42), der schwenkbar an der Basisplattform (41) angebracht ist;
ein Anhebe-/Abhebeelement (43), das an dem Schwenkrahmen (42) angebracht ist und dafür ausgestaltet ist, eine Anhebe-/Absenkbetätigung bezüglich des Schwenkrahmens (42) durch Drehen durchzuführen;
**dadurch gekennzeichnet, dass** er einen Nockenmechanismus (44) aufweist, der dafür ausgestaltet ist, das Anhebe-/Absenkelement (43) so zu betätigen, dass das Anhebe-/Absenkelement (43) bezüglich der Basisplattform (41) zusammen mit dem Drehen des Anhebe-/Absenkelements (43) gekippt wird, wobei der Nockenmechanismus (44) eine Nockensektion, die an einer inneren Wand einer Öffnung, die an der Basisplattform (41) ausgebildet ist, ausgebildet ist, und eine Vorstehsektion (55, 56) aufweist, die sich zur Außenseite des Anhebe-/Absenkelements (43) erstreckt und die dafür ausgestaltet ist, mit der Nockensektion in Eingriff zu treten, wobei die Basisplatte (41) an dem Kippmechanismus (40) vorgesehen ist, wobei ein Verbindungselement zwischen dem Anhebe-/Absenkelement (43) des Kippmechanismus (40) und der Gleitplatte (12) vorgesehen ist, und wobei die Gleitplatte (12) bezüglich der Basisplatte (11) so verschoben wird, dass sich das Anhebe-/Absenkelement (43) mittels des Verbindungselements dreht und die Basisplatte (11) durch den Kippmechanismus (40) gekippt wird.

4. Gleitvorrichtung (10) nach Anspruch 3, bei der das Federelement (13) eine spiralförmige Torsionsspiralfeder ist, bei der ein Ende an der Basisplatte (11) befestigt ist und das andere Ende an der Gleitplatte (12) befestigt ist.

## Revendications

1. Mécanisme d'inclinaison (40), comprenant :
une plate-forme de base (41) ;
un châssis oscillant (42) qui est monté de sorte à osciller sur la plate-forme de base (41) ;
un élément de levage/d'abaissement (43) qui est monté sur le châssis oscillant (42) et qui est configuré pour effectuer des opérations de levage/d'abaissement par rapport au châssis oscillant (42) par rotation ; et
**caractérisé en ce qu'**il comprend un mécanisme à came (44) qui est configuré pour activer l'élément de levage/d'abaissement (43) de telle sorte que l'élément de levage/d'abaissement (43) soit incliné par rapport à la plate-forme de base (41) en conjonction avec la rotation de l'élément de levage/d'abaissement (43), le mécanisme à came (44) comprenant une section formant came qui est formée au niveau d'une paroi interne d'une ouverture formée au niveau de la plate-forme de base (41) et une section en saillie (55, 56) qui s'étend vers l'extérieur de l'élément de levage/d'abaissement (43) et qui est configurée pour se mettre en prise avec la section formant came.

2. Mécanisme d'inclinaison (40) selon la revendication 1, dans lequel l'élément de levage/d'abaissement (43) est conçu pour se lever/s'abaisser par rapport au châssis oscillant (42) en conjonction avec la rotation de l'élément de levage/d'abaissement (43) en raison du vissage de l'élément de levage/d'abaissement (43) dans le châssis oscillant (42).

3. Appareil coulissant (10), comprenant : une plaque de base (11) ; une plaque coulissante (12) qui est en configuration coulissante par rapport à la plaque de base (11) ; un élément formant ressort (13) qui est configuré pour activer la plaque coulissante (12) par rapport à la plaque de base (11) ; et un mécanisme d'inclinaison (40), dans lequel le mécanisme d'inclinaison comprend
une plate-forme de base (41) ;
un châssis oscillant (42) qui est monté de sorte à osciller sur la plate-forme de base (41) ;
un élément de levage/d'abaissement (43) qui est monté sur le châssis oscillant (42) et qui est conçu pour effectuer des opérations de levage/d'abaissement par rapport au châssis oscillant (42) par rotation ;
**caractérisé en ce qu'**il comprend un mécanisme à came (44) qui est configuré pour activer l'élément de levage/d'abaissement (43) de telle sorte que l'élément de levage/d'abaissement (43) soit incliné par rapport à la plate-forme de base (41) en conjonction avec la rotation de l'élément de levage/d'abaissement (43), le mécanisme à came (44) comprenant une section formant came qui est formée au niveau d'une paroi interne d'une ouverture formée au niveau de la plate-forme de base (41) et une section en saillie (55, 56) qui s'étend vers l'extérieur de l'élément de levage/d'abaissement (43) et qui est configurée pour se mettre en prise avec la section formant came, dans lequel la plaque de base (41) est attachée au mécanisme d'inclinaison (40), un élément de liaison étant prévu entre l'élément de levage/d'abaissement (43) du mécanisme d'inclinaison (40) et la plaque coulissante (12), et la plaque coulissante (12) coulisse par rapport à la plaque de base (11), de telle sorte que l'élément de levage/d'abaissement (43) tourne au moyen de l'élément de liaison et que la plaque de base (11) soit inclinée par le mécanisme d'inclinaison (40).

4. Appareil coulissant (10) selon la revendication 3, dans lequel l'élément formant ressort (13) est un ressort de torsion hélicoïdal dont une extrémité est fixée à la plaque de base (11) et l'autre extrémité est fixée à la plaque coulissante (12).
